# EUROPEAN PATENT APPLICATION

(11) **EP 1 847 858 A1**
(43) Date of publication of application: **24.10.2007**
(21) Application number: 06121403.7
(22) Date of filing: 28.09.2006
(51) Int. Cl.: G02B 6/00

(54) **Backlight unit and display device employing the same**

(30) Priority: 21.04.2006 KR 20060036406
(71) Applicant: Samsung Electronics Co., Ltd., Suwon-si, Gyeonggi-Do (KR)
(72) Inventor: Lee, Moon-gyu, 438-1601 Cheongmyeong Maeul 4-danji, Yeongtong-gu, Suwon-si, Gyeonggi-do (KR); Min, Jee-hong, Yongin-si, Gyeonggi-do (KR)
(74) Representative: Greene, Simon Kenneth

(57) **Abstract**

Provided are a backlight unit (100) increasing the amount of vertical output light and a displaying apparatus employing the same. The backlight unit (100) includes: a light source (110); a first collimating unit (146) collimating light incident from the light source (110) to a first direction and outputting the collimated light; and a second collimating unit (157) collimating the light output from the first collimating unit (146) to a second direction that is different from the first direction and outputting the collimated light, wherein the light from the light source (110) is sequentially collimated to the first and second directions and outputting the collimated light.

## Description

The present invention relates to a backlight unit for increasing an amount of vertical output light and a displaying apparatus employing the same.

Liquid crystal display (LCD) devices, which are one of flat panel displays, are manufactured by arranging two substrates, on each of which an electric field generating electrode is formed, such that surfaces where the two electrodes are formed can face each other, and injecting a liquid crystal substance between the two substrates. An electric field generated as a voltage is applied to the two electrodes makes liquid crystal molecules move. Accordingly, an image is presented by the transmissivity of the light that changes as the polarization direction of light between polarizing plates arranged on both substrates changes.

Since the LCD device can not emit light by itself and can merely control the transmissivity of light, an additional light source is needed. Thus, a backlight unit is arranged on a rear surface of a LCD panel. The light emitted from the backlight unit is incident on the LCD panel so that an image is displayed by controlling the amount of light according to the arrangement of liquid crystal.

A method of placing the backlight unit includes a direct light type in which a light source is placed beneath the LCD device to directly illuminate the entire area of a substrate, and an edge light type in which a light source is placed at one of both side surfaces of a substrate to reflect and diffuse light using a light guide panel and a reflection plate. The direct light type is mainly used for large displays such as LCD TVs because the light source can be freely and effectively arranged in a large area. The edge light type is mainly used for mid- and small-sized displays such as monitors, mobile phones, and notebooks because the light source is arranged at a limited position, that is, the side surface of the light guide plate.

In the meantime, since the light emitted from the backlight unit is a diffused light and the LCD panel performs a shutter function to pass or block the light by changing the polarization direction of a linear polarization that passes through the LCD panel, a degree of a change in the polarization direction changes according to the direction in which the light is incident so that a contrast ratio varies according to the direction to view. Even when the reduction of the contrast ratio is reduced using a phase difference film, when a viewing angle is 170°, the contrast ratio is several thousands to one when viewed in front of a display device, but becomes about 10:1 when viewed at a degrees of 85° at the left and right sides of the display device. Consequently, the quality of a display is much deteriorated at a large viewing angle.

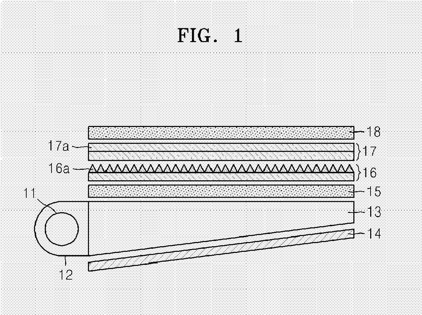

FIG. 1 is a cross-sectional view illustrating the structure of a conventional backlight unit. Referring to FIG. 1, in the conventional backlight unit, a ramp 11 that is a linear light source and a ramp housing 12 encompassing the ramp 11 are arranged at one side surface of a light guide plate 13. The light guide plate 13 changes the light emitted from the ramp 11 to a surface light source. In general, unevenness or a scattering pattern (not shown) made by etching or printing is formed on a lower surface of the light guide plate 13 to make a uniform surface light source by scattering the light. A reflection plate 14 is arranged on the lower surface of the light guide late 13 to prevent the leakage of light. A first diffuser film 15, two prism films 16 and 17, and a second diffuser film 18 are sequentially arranged on an upper portion of the light guide plate 13 to secure a desired viewing angle. The two prism films 16 and 17 include a plurality of linear prisms 16a and 17a, each having a triangular sectional shape, on the upper portion thereof. The two prism films 16 and 17 are arranged such that the linear prisms 16a and 17a are perpendicularly arranged.

The use of the two prism films is to secure a desired viewing angle. However, as the number of the prism films increases, costs increase and loss of light due to total reflection is much generated. Also, it is a problem that collimation is insufficient since a full width at half maximum intensity (FWHM) is typically 55°.

To secure a viewing angle, a viewing angle compensation film is used, or a liquid crystal mode for compensating for the deterioration of the performance of liquid crystal according to an angle using a variety of methods such as an in plane switching (IPS) mode, a vertical alignment (VA) mode, and an optical compensated bend (OCB) mode is used. However, costs are raised due to the increase of NA and the increase of manufacturing steps.

The present invention provides a backlight unit increasing the amount of vertical output light and a displaying apparatus employing the same.

According to an aspect of the present invention, there is provided a backlight unit including: a light source; a first collimating unit collimating light incident from the light source to a first direction and outputting the collimated light; and a second collimating unit collimating the light output from the first collimating unit to a second direction that is different from the first direction and outputting the collimated light, wherein the light from the light source is sequentially collimated to the first and second directions and outputting the collimated light.

According to another aspect of the present invention, there is provided a backlight unit including: a first light source; a first light guide plate having a first light incident surface on which light from the first light source is incident and collimating incident light in a direction in which a range of a distribution of a horizontal angle of the incident light decreases; a second light guide plate having a second light incident surface on which light output from the first light exit surface is incident, a second light exit surface from which the incident light is output, and a lower surface on which an inclined surface inclined with respect to the second light exit surface and a sub-light incident surface parallel to the second light incident surface are alternately arranged, and collimating the incident light in a direction in which a range of a distribution of a vertical angle of the incident light decreases; a first prism sheet arranged between the first light exit surface and the second light incident surface and shifting a distribution of an horizontal angle of the light output from the first light exit surface to be incident on the second light incident surface; a sub-light guide plate having a sub-light exit surface arranged to face the sub-light incident surface; a sub-light source emitting light to the sub-light guide plate; a sub-prism sheet arranged between the sub-light guide plate and the sub-light incident surface and shifting a distribution of a horizontal angle of the light output from the sub-light guide plate to be incident on the sub-light incident surface; and a second prism sheet arranged on an upper portion of the second light exit surface of the second light guide plate and shifting a distribution of a vertical angle of light output from the second light exit surface.

According to a further aspect of the invention there is provided a display device comprising:
a backlight unit according to the invention;
a diffuser plate for diffusing light; and
a display panel for forming an image.

The above and other features and advantages of the present invention will become more apparent by describing in detail preferred embodiments thereof with reference to the attached drawings in which:
FIG. 1 is a cross-sectional view of the conventional backlight unit;
FIG. 2 is an exploded perspective view of a backlight unit according to an embodiment of the present invention;
FIGS. 3A through 3D are views showing the distribution of light at each of steps in which light is guided in the backlight unit of FIG. 2;
FIG. 4 is an exploded perspective view of a backlight unit according to another embodiment of the present invention;
FIG. 5 is an exploded perspective view of a backlight unit according to yet another embodiment of the present invention;
FIGS. 6A and 6B are cross-sectional views showing the backlight unit of FIG. 5 in different directions; and
FIG. 7 is an exploded perspective view of a display device according to an embodiment of the present invention.

Hereinafter, the present invention will be described more fully with reference to the accompanying drawings, in which exemplary embodiments of the invention are shown. The invention may, however, be embodied in many different forms and should not be construed as being limited to the embodiments set forth herein; rather, these embodiments are provided so that this disclosure will be thorough and complete, and will fully convey the concept of the invention to those skilled in the art. In the drawings, like reference numerals denote like elements, and the sizes of each elements may be exaggerated for clarity.

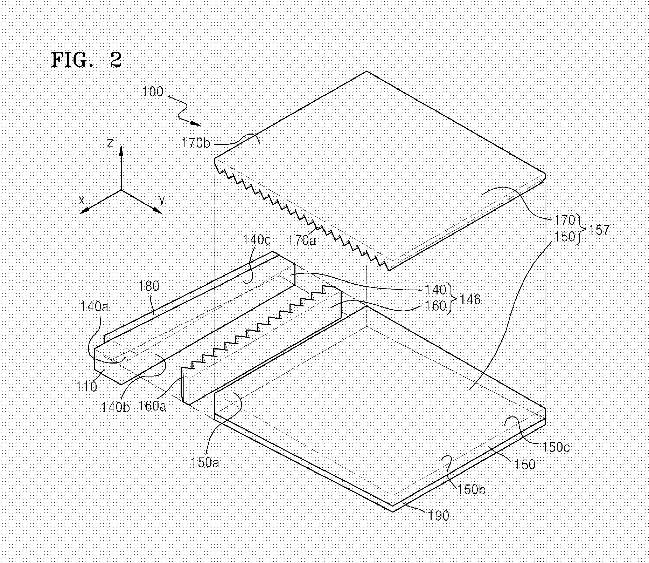

FIG. 2 is an exploded perspective view of a backlight unit 100 according to an embodiment of the present invention. Referring to FIG. 2, the backlight unit 100 includes a light source 110, a first collimating unit 146, and a second collimating unit 157.

The first and second collimating units 146 and 157 respectively include a first light guide plate 140 and a first prism sheet 160, and a second light guide plate 150 and a second prism sheet 170. The first and second collimating units 146 and 157 emit light by sequentially collimating the light from the light source 110 in first and second directions. The first and second directions may be directions in which, for example, a horizontal angle and a vertical angle are constant.

The direction of exit light can be presented by the horizontal angle and vertical angle. The horizontal angle signifies an angle made between the exit light projected to a second light exit surface 150b and a normal to a first light exit surface 140b. The vertical angle signifies an angle made between the exit light and a normal to the second light exit surface 150b. In FIG. 2, the horizontal angle is an angle made between the exit light projected to an X-Y plane and the Y axis while the vertical angle is an angle between the exit light and the Z axis.

The first collimating unit 146 including the first light guide plate 140 and the first prism sheet 160 collimates the light emitted from the light source 110 in a direction in which the horizontal angle is constant. The first light guide plate 140 includes a first light incident surface 140a on which the light of the light source 110 is incident and a first light exit surface 140b from which the incident light exits. The first light guide plate 140 collimates the light of the light source 110 in a direction in which the distribution of the horizontal angle decreases and outputs the collimated light. To this end, the first light guide plate 140 can be formed in a wedge type such that, as the distance from the light source 110 increases, the distance between the first light exit surface 140b and a surface 140c facing the first light exit surface 140b decreases.

The first prism sheet 160 is arranged between the first light exit surface 140b and the second incident light surface 150a. The first prism sheet 160 shifts the distribution of the horizontal angle of the light output through the first light exit surface 140b. That is, the distribution of the horizontal angle of the light output from the first light exit surface 140b is shifted to be an angle close to 0° and the light is incident on the second incident surface 150a. The first prism sheet 160, for example, can be formed of a sheet on which a prism pattern 160a protruding toward the first light exit surface 140b is formed.

The second collimating unit 157 includes the second light guide plate 150 and the second prism sheet 170 and collimates the light whose horizontal angle is collimated in a certain direction by the first collimating unit 146, in a direction in which the vertical angle is constant.

The second light guide plate 150 includes the second light incident surface 150a on which the light output from the first collimating unit 146 is incident, and the second light exit surface 150b from which the incident light is output. The second light guide plate 150 collimates the incident light in a direction in which the distribution of the vertical angle decreases. To this end, the second light guide plate 150 is formed in a wedge type such that, as the distance from the second light incident surface 150a increases, the distance between the second light exit surface 150b and a surface 150c facing the second light exit surface 150b decreases.

The second prism sheet 170 is arranged on the upper portion of the second light guide plate 150 parallel to the second light exit surface 150b. The second prism sheet 170 shifts the distribution of the vertical angle of the light output through the second light exit surface 150b. That is, to shift the distribution of the vertical angle of the light output from the second light exit surface 150b to be an angle close to 0°, the second prism sheet 170, for example, can be formed of a sheet on which a prism pattern 170a protruding toward the second light exit surface 150b is formed.

The first and second light guide plates 140 and 150 are formed of a transparent material capable of transmitting incident light, for example, poly methylmeth acrylate (PMMA) exhibiting superior light transmissivity and weather resistance. Also, the first prism sheet 160 can be integrally formed with the second light guide plate 150 or separately formed

A first reflection plate 180 may be further provided on the surface 140c facing the first light exit surface 140b of the first light guide plate 140. The first reflection plate 180 reflects the light input through the first light incident surface 140a and reaching the first reflection plate 180 toward the first light exit surface 140b. Also, a second reflection plate 190 may be further provided on a lower surface of the second light guide plate 150. The second reflection plate 190 reflects the light input through the second light incident surface 150a and reaching the second reflection plate 190 toward the second light exit surface 150b.

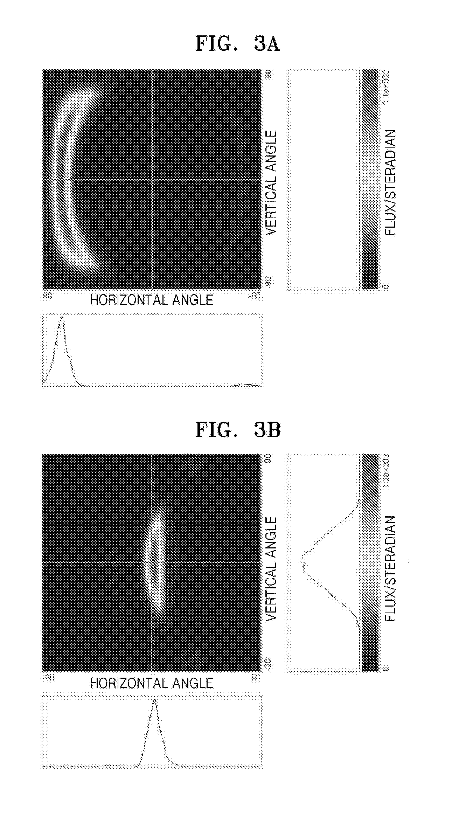

FIGS. 3A through 3D are views showing the distribution of light at each of steps in which light is guided in a light source of FIG. 2. The first light guide plate 140 used in a test is of a wedge type in which the angle made by the first light exit surface 140b and the surface 140c facing the same is 1°. The second light guide plate 160 used in the test is of a wedge type in which the angle made by the second light exit surface 150b and the surface 150c facing the same is 1°. The vertex angle of each of the prism patterns 160a and 170a respectively formed on the first and second prism sheets 160 and 170 is 70°.

FIG. 3A shows the distribution of the light output from the first light exit surface 140b. FIG. 3B shows the distribution of the light incident on the second light incident surface 150a after passing through the first prism sheet 160. Referring to FIG. 3A, the distribution of the light after passing through the first light guide plate 140 shows that the vertical angle is wide in a range between -90° and +90° while the distribution of the horizontal angle is collimated in a direction close to about 90°. Referring to FIG. 3B, after passing through the first prism sheet 160, the distribution of the light is shifted in a direction in which the horizontal angle approaches 0°. The amount of light is maximum at a position where the horizontal angle is 0° and a full width at half maximum is about ±7°.

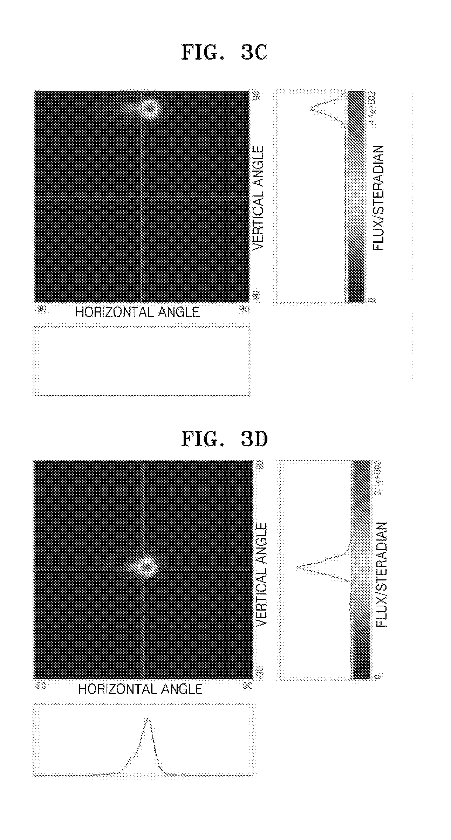

FIGS. 3C and 3D show the distribution of the light output from the second light exit surface 150b and the distribution of the light output from the second light exit surface 150b and then from a light exit surface 170b of the second prism sheet 170, respectively. Referring to FIG. 3C, in the distribution of the light after passing through the second light guide plate 150, although the distribution of the horizontal angle hardly changes, the distribution of the vertical angle is collimated in a direction closed to about 90°. Referring to FIG. 3D, after passing through the second prism sheet 170, the distribution of the light is shifted in a direction in which the vertical angle is 0°, that is, perpendicular to the light exit surface 170b.

The backlight unit according to the present invention provides light emitting in a direction perpendicular to the light exit surface 170b by sequentially collimating the light from the light source 110 with respect to the horizontal angle component and the vertical angle component using the first collimating unit 146 and the second collimating unit 157.

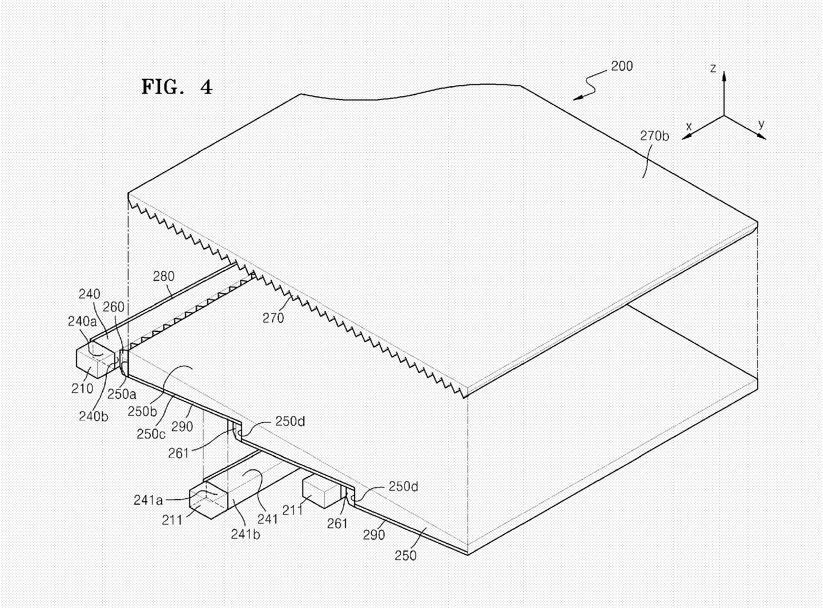

FIG. 4 is an exploded perspective view of a backlight unit 200 according to another embodiment of the present invention. Referring to FIG. 4, the backlight unit 200 includes a first light source 210 and a sub-light source 211, a first light guide plate 240 and a sub-light guide plate 241, on which lights from the first light source 210 and the sub-light source 211 are incident, and which collimate the incident light in a direction in which the distribution of the horizontal angle of the incident light decreases and output the collimated light, a second light guide plate 250 collimating the lights from the first light guide plate 240 and the sub-light guide plates 241 in a direction in which the distribution of the vertical angle decreases and outputting the collimated light upward, a first prism sheet 260 and a sub-prism sheet 261 shifting the distribution of the horizontal angle of the light, and a second prism sheet 270 shifting the distribution of the vertical angle of the light.

The horizontal angle signifies an angle made between the exit light projected to a second light exit surface 250b and a normal to a first light exit surface 240b. The vertical angle signifies an angle made between the exit light and a normal to the second light exit surface 250b. In FIG. 4, the horizontal angle is an angle made between the exit light projected to an X-Y plane and the Y axis while the vertical angle is an angle between the exit light and the Z axis.

The first light guide plate 240 has a first incident light surface 240a on which the light from the first light source 210 is incident and a first light exit surface 240b from which the incident light exists. Also, the first light guide plate 240 is of a wedge type in which, as the distance from the first light incident surface 240a increases, the distance between the first light exit surface 240b and a surface (not shown) facing the first light exit surface 240b decreases.

The second light guide plate 250 has a second light incident surface 250a facing the first light exit surface 240b and the light output from the first light exit surface 240b is incident on the second light incident surface 250a. Also, the incident light is output through the second light exit surface 250b. An inclined surface 250c inclined to the second light exit surface 250b and a second sub-light incident surface 250d parallel to the second light incident surface 250a are alternately arranged on the lower surface of the second light guide plate 250. The lower surface, for example, may have a serrated section.

The sub-light guide plate 241 includes a first sub-light incident surface 241a on which the light from the sub-light source 211 is incident and a first sub-light exit surface 241b from which the light exits. The sub-light guide plate 241 is arranged parallel to the second sub-light incident surface 250a. Also, the sub-light guide plate 241 is of a wedge type in which, as the distance from the first sub-light incident surface 241a increases, the distance between the first sub-light exit surface 241b and a surface (not shown) facing the first sub-light exit surface 241b decreases. The sub-light source 211 is arranged to emit light onto the first sub-light incident surface 241a.

The first prism sheet 260 is arranged between the first light exit surface 240b and the second light incident surface 250a parallel to the first light exit surface 240b. The first prism sheet 260 shifts the distribution of the horizontal angle of the light output from the first light exit surface 240b and is a sheet on which a prism pattern protruding toward the first light exit surface 240b is formed. The first prism sheet 260 can be formed integrally with the second light guide plate 250 or separately formed. Also, the sub-prism sheet 261 is arranged between the sub-light guide plate 241 and the second sub-light incident surface 250d parallel to the second light incident surface 250a. Like the first prism sheet 260, the sub-prism sheet 261 shifts the distribution of the horizontal angle of the light output from the first sub-light exit surface 241b and is a sheet on which a prism pattern protruding toward the first sub-light exit surface 241b is formed.

The second prism sheet 270 is arranged above the second light exit surface 250b parallel to the second light exit surface 250b. The second prism sheet 270 shifts the distribution of the vertical angle of the light output from the second light exit surface 250b and outputs toward a light exit surface 270b. The second prism sheet 270, for example, may be a sheet on which a prism pattern protruding toward the second light exit surface 250b is formed.

A first reflection plate 280 reflecting the light toward the first light exit surface 240b and the first sub-light exit surface 241b may be further provided on the side surfaces of the first light guide plate 240 and the sub-light guide plate 241, respectively. A second reflection plate 290 reflecting the light toward the second light exit surface 250b may be further provided on the inclined surface 250c.

Since the backlight unit 200 collimates the light in the horizontal angle direction and vertical angle direction, the amount of the vertical output light is effectively increased. Also, the backlight unit 200 is suitable for a large screen display and can be manufactured by appropriately selecting the number of the sub-light guide plate 241, the sub-light source 211, and the sub-prism sheet 261.

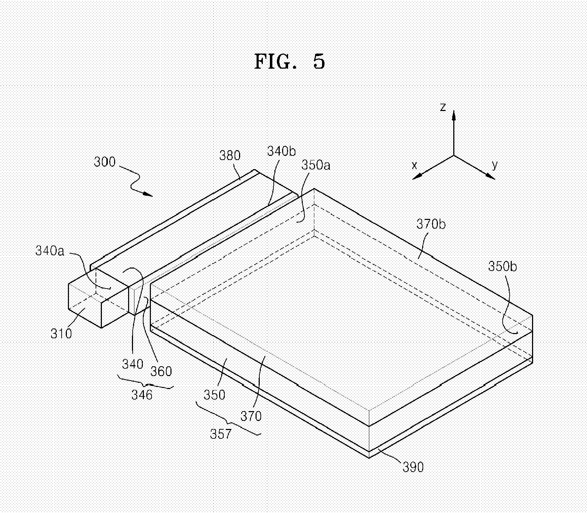

FIG. 5 is an exploded perspective view of a backlight unit 300 according to yet another embodiment of the present invention. Referring to FIG. 5, the backlight unit 300 includes a light source 310 and first and second collimating units 346 and 357. The first collimating unit 346 includes a first light guide plate 340 having a first light incident surface 340a on which the light from the light source 310 is incident and a first light exit surface 340b from which the incident light exits, and a first fine structure layer 360 formed on the first light exit surface 340b and collimating the light output from the first light exit surface 340b in a direction in which the horizontal angle of the light decreases and outputting the collimated light.

The second collimating unit 357 includes a second light guide plate 350 having a second light incident surface 350a on which the light from the first fine structure layer 360 is incident and a second light exit surface 350b from which the incident light exits, and a second fine structure layer 370 formed on the second light exit surface 350b and collimating the light output from the second light exit surface 350b in a direction in which the vertical angle of the light decreases and outputting the collimated light.

The horizontal angle signifies an angle made between the exit light projected to the second light exit surface 350b and a normal to the first light exit surface 340b. The vertical angle signifies an angle made between the exit light and a normal to the second light exit surface 350b. In FIG. 5, the horizontal angle is an angle made between the exit light projected to an X-Y plane and the Y axis while the vertical angle is an angle between the exit light and the Z axis.

The first light guide plate 340 is of a flat type in which the distance between the first light exit surface 340b and a surface facing the first light exit surface 340b is constant. The second light guide plate 350 is also of a flat type in which the distance between the second light exit surface 350b and a surface facing the second light exit surface 350b is constant. The first fine structure layer 360 is arranged at a side surface of the first light exit surface 340b parallel to the first light exit surface 340b. The second fine structure layer 370 is arranged on the upper surface of the second light exit surface 350b parallel to the second light exit surface 350b. First and second reflection plates 380 and 390 reflecting the light toward the first light exit surface 340b and the second light exit surface 350b, respectively, can be further provided at the side surface of the first light guide plate 340 and on the lower surfaces of the second light guide plate 350.

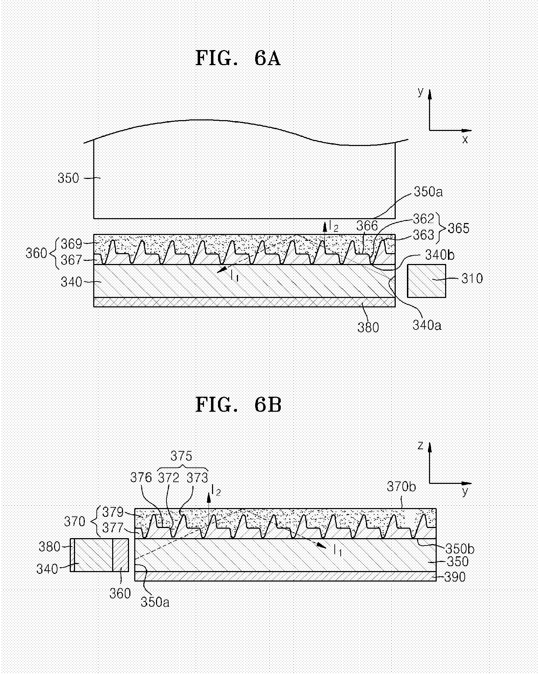

FIGS. 6A and 6B are cross-sectional views showing the backlight unit of FIG. 5 in the X-Y and Y-Z planes, respectively. Referring first to FIG. 6A, the first fine structure layer 360 includes a first pattern layer 367 formed by repeatedly arranging a first output unit 365 and a first high refractivity layer 369 formed of a material having a refractivity higher than that of the first pattern layer 367, on the first pattern layer 367. The first output unit 365 is formed by a first concave portion 362 formed to be concave and a first convex portion 363 formed to be convex. The first concave portion 362 and the first convex portion 363 are continuously formed and a first plane portion 366 is formed between neighboring first output units. The first concave portion 362 can be formed of a curved surface and a plane or at least two planes.

The light emitted from the light source 310 is incident on the first light guide plate 340 through the first light incident surface 340a and radiated in all directions. The light radiated downward is reflected by the first reflection plate 380 and proceeds toward the first light exit surface 340b. The light proceeding toward the first light exit surface 340b is refracted and transmitted through the first pattern layer 367 and incident on the first high refractivity layer 369. The first light guide plate 340 and the first pattern layer 367 are formed of a material having the same refractivity while the first high refractivity layer 369 is formed of a material having a refractivity higher than that of the first pattern layer 367. Thus, most of the light is incident on the upper portion of the first pattern layer 367 at an angle greater than a critical angle and to be totally reflected, and output from the upper surface of the first high refractivity layer 369 at an angle close to the right angle. That is, the light is incident on the second light incident surface 350a by being collimated such that a horizontal angle component of the light is close to 0°. The first high refractivity layer 369 may be formed of an anisotropic material. For example, the first high refractivity layer 369 may have a refractivity similar to those of the first pattern layer 367 and the first light guide plate 340 with respect to a first polarized light I₁, and a refractivity higher than those of the first pattern layer 367 and the first light guide plate 340 with respect to a second polarized light I₂. In this case, the first polarized light I₁ passes through the first pattern layer 367, as it is, and then is totally reflected by the upper portion of the first high refractivity layer 369 so that the second polarized light I₂ only is collimated. Poly ethylene terephthalate (PET), poly butylenes terephthalate (PBT), and poly ethylene naphthalate (PEN) can be used as the anisotropic material.

Next, referring to FIG. 6B, like the first fine structure layer 360, the second fine structure layer 370 includes a second pattern layer 377 formed by repeating a second output unit 375 that is formed of a second concave portion 372 and a second convex portion 363, and a second high refractivity layer 379 formed on the second pattern layer 377 to have a refractivity higher than that of the second pattern layer 377. A second plane portion 376 is formed between neighboring second output units. The light incident on the second light incident surface 350a after collimated by the first fine structure layer 360 so that the horizontal angle component thereof decreases is collimated such that the vertical angle component, that is, an angle made by the z axis, decreases by the same principle, and output to an output surface 370b. Also, when the second high refractivity layer 379 is formed of an anisotropic material having a refractivity similar to those of the second pattern layer 377 and the second light guide plate 350 with respect to the first polarized light I₁ and a refractivity higher than those of the second pattern layer 377 and the second light guide plate 350 with respect to the second polarized light I₂, light of a particular polarization only can be collimated.

While passing through the first fine structure layer 360 and the second fine structure layer 370, the light emitted from the light source 310 is sequentially collimated in a direction in which the horizontal angle component and the vertical angle component respectively decrease, and is output almost perpendicularly with respect to the output surface 370b. Also, when the first and second high refractivity layers 369 and 379 are formed of an anisotropic material, since the light is separated into the first polarized light and the second polarized light, by employing the backlight unit in an LCD device, the overall structure of the LCD device can be simplified. That is, the LCD panel is a device dependent on the polarization characteristic of the incident light and needs a polarization film to process light of a different polarization direction to use light of a particular polarization direction only. Since the light of a particular polarization direction is selectively collimated and output, an additional polarization film to use the light of a particular polarization direction is not needed.

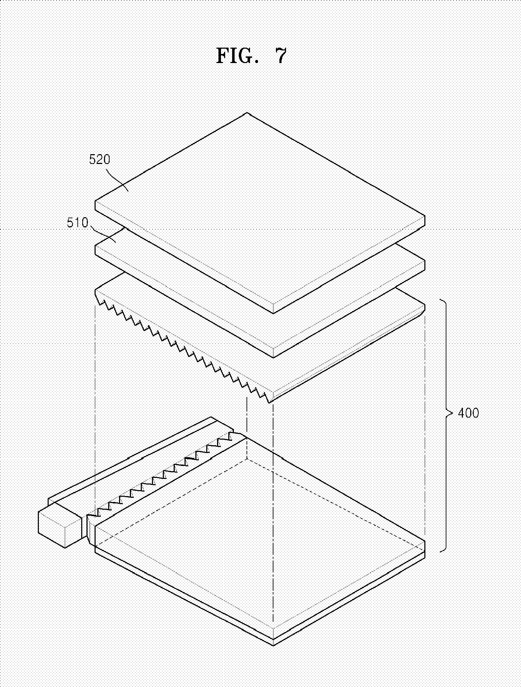

FIG. 7 is an exploded perspective view of a display device having a light guide plate module according to an embodiment of the present invention. An LCD device according to the present embodiment includes a backlight unit 400, a diffuser plate 510 diffusing the light emitted from the backlight unit 400, and a display panel 520 forming an image using the light diffused by the diffuser plate 510. The display panel 520, for example, may be an LCD panel. Although it is shown as the backlight 100 of FIG. 2, the backlight unit 400 can employ the backlight units 200 of FIG. 4 and 300 of FIG. 5. Since the structure and operation of the backlight unit 400 are the same as those described above, detailed descriptions thereof will be omitted herein. The light vertically emitted from the backlight unit 400 is diffused by the diffuser plate 510 and passes through the display panel 520 so that an image is formed. The display device can improve a display characteristic such as a contrast ratio because lights are vertically incident on the display panel 520.

As described above, according to the backlight unit according to the present invention and the LCD device employing the same, the light from the light source can be sequentially collimated in the horizontal angle and vertical angle directions so that the light perpendicular to the display panel can be provided more efficiently. Also, when an anisotropic film is used, since a particular polarization only can be collimated, an additional polarization film is not needed for the LCD panel. In addition, since an optical device such as a lens is not needed, alignment of parts is not needed so that productivity is improved.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A backlight unit (100) comprising:
a light source (110);
a first collimating unit (146) for collimating light incident from the light source (110) to a first direction and for outputting the collimated light; and
a second collimating unit (157) for collimating the light output from the first collimating unit (146) to a second direction that is different from the first direction and for outputting the collimated light,
wherein the light from the light source (110) is arranged to be sequentially collimated to the first and second directions.

2. The backlight unit of claim 1, wherein the first collimating unit (146) comprises:
a first light guide plate (140) including a first light incident surface (140a) on which the light from the light source is arranged to be incident and a first light exit surface (140b) from which the incident light is arranged to be output, and arranged to collimate the incident light in a direction in which a range of a distribution of a horizontal angle of the incident light decreases, and
a first prism sheet (160) for shifting a distribution of an horizontal angle of light output from the first light exit surface (140b), and
the second collimating unit (157) comprises:
a second light guide plate (150) including a second light incident surface (150a) on which the light output from the first light exit surface (140b) is arranged to be incident and a second light exit surface (150b) from which the incident light is arranged to be output, and arranged to collimate the incident light in a direction in which a range of a distribution of a vertical angle of the incident light decreases, and
a second prism sheet (170) for shifting a distribution of a vertical angle of light output from the second light exit surface (150b).

3. The backlight unit of claim 2, wherein the first light guide plate (140) is of a wedge type in which, as a distance from the light source(110) increases, a distance between the first light exit surface (140b) and a surface facing the first light exit surface (140b) decreases.

4. The backlight unit of claim 3, wherein the first prism sheet (160) is a sheet on which a prism pattern (160a) protruding toward the first light exit surface (140b) is formed.

5. The backlight unit of claim 4, wherein the second light guide plate (150) and the first prism sheet (160) are integrally formed.

6. The backlight unit of any of claims 2 to 5, wherein the second light guide plate (150) is of a wedge type in which, as a distance from the second incident light surface (150a) increases, a distance between the second light exit surface (150b) and a surface facing the second light exit surface (150b) decreases.

7. The backlight unit of claim 6, wherein the second prism sheet (170) is a sheet on which a prism pattern (170a) protruding toward the second light exit surface (150b) is formed.

8. The backlight unit of claim 1, wherein the first collimating unit (346) comprises:
a first light guide plate (340) including a first light incident surface (340a) on which the light from the light source (310) is arranged to be incident and a first light exit surface (340b) from which the incident light is arranged to be output, and
a first fine structure layer (360) formed on the first light exit surface (340b) and for collimating the light output from the first light exit surface (340b) to a direction in which a horizontal angle decreases, and
the second collimating unit (357) comprises:
a second light guide plate (350) including a second light incident surface (350a) on which the light output from the first light exit surface (340b) is arranged to be incident and a second light exit surface (350b) from which the incident light is arranged to be output, and
a second fine structure layer (370) formed on the second light exit surface (350b) and for collimating the light output from the second light exit surface (350b) to a direction in which a vertical angle decreases.

9. The backlight unit of claim 8, wherein the first light guide plate (340) is of a flat type in which a distance between the first light exit surface (340b) and a surface facing the first light exit surface (340b) is constant.

10. The backlight unit of claim 9, wherein the first fine structure layer (360) comprises:
a first pattern layer (367) formed on the first light exit surface (340b), on which a first output unit (365) formed of a first concave portion (362) formed to be concave and a first convex portion (363) formed to be convex is repeatedly arranged, and
a first high refractivity layer (369) formed on the first pattern layer (367) and formed of a material having a refractivity greater than that of the first pattern layer (367).

11. The backlight unit of claim 10, wherein a plane portion (366) is provided between neighboring first output units.

12. The backlight unit of claim 10 or 11, wherein the first high refractivity layer (369) is formed of an anisotropic material having refractivity that varies according to polarization of incident light.

13. The backlight unit of any of claims 8 to 12, wherein the second light guide plate (350) is of a flat type in which a distance between the second light exit surface (350b) and a surface facing the second light exit surface (350b) is constant.

14. The backlight unit of claim 13, wherein the second fine structure layer (370) comprises:
a second pattern layer (377) formed on the second light exit surface (350b), on which a second output unit (375) formed of a second concave portion (372) formed to be concave and a second convex portion (363) formed to be convex is repeatedly arranged, and
a second high refractivity layer (379) formed on the second pattern layer (377) and formed of a material having a refractivity greater than that of the second pattern layer (377).

15. The backlight unit of claim 14, wherein a plane portion (376) is provided between neighboring second output units.

16. The backlight unit of claim 14 or 15, wherein the second high refractivity layer (379) is formed of an anisotropic material having a refractivity that varies according to polarization of incident light.

17. The backlight unit of claim 1, wherein the first collimating unit comprises:
a first light guide plate (240) having a first light incident surface (240a) on which light from the first light source is arranged to be incident and a first light exit surface (240b) from which the incident light is arranged to be output, and arranged to collimate incident light in a direction in which a range of a distribution of a horizontal angle of the incident light decreases, and the second collimating unit comprises:
a second light guide plate (250) having a second light incident surface (250a) on which light output from the first light exit surface (240b) is arranged to be incident, a second light exit surface (250b) from which the incident light is arranged to be output, and a lower surface on which an inclined surface inclined with respect to the second light exit surface (250a) and a sub-light incident surface (250d) parallel to the second light incident surface (250a) are alternately arranged, and arranged to collimate the incident light in a direction in which a range of a distribution of a vertical angle of the incident light decreases, and wherein the backlight unit further comprises:
a first prism sheet (260) arranged between the first light exit surface (240b) and the second light incident surface (250a) and for shifting a distribution of an horizontal angle of the light output from the first light exit surface (240b) to be incident on the second light incident surface (250a);
a sub-light guide plate (241) having a sub-light exit surface (241b) arranged to face the sub-light incident surface;
a sub-light source (211) arranged to emit light to the sub-light guide plate (241);
a sub-prism sheet (261) arranged between the sub-light guide plate (241) and the sub-light incident surface and for shifting a distribution of a horizontal angle of the light output from the sub-light guide plate (241) to be incident on the sub-light incident surface; and
a second prism sheet (270) arranged on an upper portion of the second light exit surface (250b) of the second light guide plate (250) and for shifting a distribution of a vertical angle of light output from the second light exit surface (250b).

18. The backlight unit of claim 17, wherein the second prism sheet (270) is a sheet on which a prism pattern protruding toward the second light exit surface (250b) is formed.

19. The backlight unit of claim 17 or 18, wherein the lower surface has a serrated section.

20. The backlight unit of claim 17, 18 or 19, wherein the first light guide plate (240) is of a wedge type in which, as a distance from the light source increases, a distance between the first light exit surface (240b) and a surface facing the first light exit surface (240b) decreases.

21. The backlight unit of claim 20, wherein the first prism sheet (260) is a sheet on which a prism pattern protruding toward the first light exit surface is formed.

22. The backlight unit of any of claims 17 to 21, wherein the sub-light guide plate (241) is of a wedge type in which, as a distance from the light source increases, a distance between the sub-light exit surface (241b) and a surface facing the sub-light exit surface (241b) decreases.

23. The backlight unit of claim 22, wherein the sub-prism sheet (261) is a sheet on which a prism pattern protruding toward the sub-light exit surface (241b) is formed.

24. The backlight unit of claim 23, wherein the first prism sheet (260) and the sub-prism sheet (261) are integrally formed of the second light guide plate (250).

25. A display device comprising:
the backlight unit of any preceding claim;
a diffuser plate diffusing light emitted from the backlight unit and outputting the diffused light; and
a display panel forming an image using the light output from the diffuser plate.
